# EUROPÄISCHE PATENTANMELDUNG

(11) **EP 3 477 253 A1**
(43) Veröffentlichungstag der Anmeldung: **01.05.2019**
(21) Anmeldenummer: 17199105.2
(22) Anmeldetag: 30.10.2017
(51) Int. Cl.: G01B 11/24, G01B 5/00, E05B 19/00, B23C 3/35, G06K 9/20

(54) **VORRICHTUNG ZUR ERFASSUNG KONSTRUKTIVER MERKMALE EINES SCHLÜSSELS**

(71) Anmelder: ERWE Handelsgesellschaft m.b.H., 9560 Feldkirchen (AT)
(72) Erfinder: Rheina-Wolbeck, Gert, 9551 Bodensdorf (AT)
(74) Vertreter: Schwarz & Partner Patentanwälte OG

(57) **Zusammenfassung**

Vorrichtung (9) zur Erfassung konstruktiver Merkmale eines Schlüssels (1), welcher einen Schlüsselkopf (2), einen Schlüsselschaft (3) sowie einen Anschlag (4) aufweist, und der Schlüsselschaft (3) ein Schlüsselprofil, mit einer in den Schlüsselschaft (3) eingefrästen Schlüsselprofilrille (5) umfasst, sowie ein Sperrprofil (6) aufweist, und der Schlüssel (1) einen zwischen dem Schlüsselkopf (2) und dem Anschlag (4) angeordneten Identifikationsbereich (7) aufweist, wobei die Vorrichtung (9) eine Beleuchtungseinheit (10), eine Kamera (11) und eine mit der Kamera (11) verbundene Rechnereinheit (12) aufweist, wobei die Beleuchtungseinheit (10) den Schlüssel (1) ausleuchtet, die Kamera (11) ein Bild zumindest des Identifikationsbereichs (7) des Schlüssels (1) erfasst und an die Rechnereinheit (12) übermittelt, und die Rechnereinheit (12) eine geometrische Struktur von Fräskanten (8) der auslaufenden Schlüsselprofilrille (5) in dem Bild erfasst und eine Geometrie der Schlüsselprofilrille (5) anhand der erfassten geometrischen Struktur der Fräskanten (8) im Identifikationsbereich (7) ermittelt.

## Beschreibung

Die Erfindung betrifft eine Vorrichtung zur Erfassung konstruktiver Merkmale eines Schlüssels, wobei der Schlüssel einen Schlüsselkopf und einen Schlüsselschaft sowie einen Anschlag aufweist, und der Schlüsselschaft ein Schlüsselprofil, welches zumindest eine in den Schlüsselschaft eingefräste Schlüsselprofilrille umfasst, sowie ein Sperrprofil aufweist, und der Schlüssel einen zwischen dem Schlüsselkopf und dem Anschlag angeordneten Identifikationsbereich aufweist, in welchem die Schlüsselprofilrille ausläuft, und wobei die Vorrichtung eine Beleuchtungseinheit, eine Kamera und eine mit der Kamera verbundene Rechnereinheit aufweist.

Vorrichtungen zur Erfassung konstruktiver Merkmale eines Schlüssels sind Lesegeräte, welche es ermöglichen Daten über Geometrie, Abmessungen und Anordnung der konstruktiven Merkmale von Schlüsseln zu erfassen. Die erfassten Daten können in einem weiteren Schritt verwendet werden, um beispielsweise Kopien des Schlüssels anzufertigen, Kopien bei einem Schlüsselproduzenten anzufordern, oder die Qualität einer Kopie anhand der Daten des originalen Schlüssels zu überprüfen. Auf dem Markt sind eine Vielzahl unterschiedlichster Schlüsselsysteme verfügbar, wobei die Schlüssel verschiedener Systeme sich in einigen konstruktiven Merkmalen unterscheiden. Im Allgemeinen weist ein Schlüssel einen Schlüsselkopf, einen Schlüsselschaft sowie einen Anschlag auf. Der Schlüsselkopf dient als Griffstück zur Bedienung des Schlüssels und kann unterschiedliche geometrische Strukturen, wie beispielsweise eine quadratische oder rechteckige Form, in der Regel mit abgerundeten Kanten, eine kreisförmige oder eine ovale Form aufweisen. Die geometrische Struktur des Schlüsselkopfes kann einen Rückschluss auf den Schlüsselhersteller erlauben, da ein Schlüsselhersteller in der Regel einen oder mehrere unterschiedliche Schlüsselköpfe verwendet, um seine Schlüssel von jenen anderer Hersteller unterscheidbar zu gestalten. Die Fläche des Schlüsselkopfes wird von Schlüsselherstellern zudem oftmals dazu verwendet, Identifikationsmarkierungen anzubringen. Diese Identifikationsmarkierungen können beispielsweise Logos des Schlüsselherstellers, des Schlüsselsystems eines bestimmten Herstellers, sowie Seriennummern umfassen. Der Schlüsselschaft schließt unmittelbar an den Schlüsselkopf an und kann unterschiedliche Querschnitte aufweisen. Entlang des Schlüsselschafts ist ein Schlüsselprofil ausgebildet, welches aus zumindest einer Schlüsselprofilrille besteht. Ein zu einem bestimmten Schließzylinder passendes Schlüsselprofil erlaubt das Einführen des Schlüssels in den bestimmten Schließzylinder, beziehungsweise verhindert das Einführen in ein unpassendes Schloss. Zudem ist an dem Schlüsselschaft ein Sperrprofil ausgeformt, welches mit der Mechanik eines Schlosses zusammenwirkt, um den Schließzylinder zu öffnen oder zu versperren. Die Schlüsselprofilrille des Schlüsselprofils, sowie das Sperrprofil werden in der Regel durch Frästechniken in dem Schlüsselschaft ausgeformt. Die Anwendung von Fertigungstechniken führt dazu, dass die Schlüsselprofilrille beziehungsweise die Schlüsselprofilrillen in einem Identifikationsbereich, welcher zwischen dem Schlüsselkopf und dem Anschlag angeordnet ist, auslaufen. Der Anschlag begrenzt die Einführtiefe des Schlüssels in das Schloss und kann beispielsweise an der Schlüsselspitze oder an einer Position entlang des Schlüsselschafts in der Nähe des Schlüsselkopfes angeordnet sein.

Vorrichtungen zur Erfassung konstruktiver Merkmale eines Schlüssels gemäß dem Stand der Technik erfassen die konstruktiven Merkmale mittels optischer Systeme. Hierbei wird der Schlüssel mit dem Schlüsselschaft und, je nach Anwendungsfall, dem Anschlag in die Vorrichtung eingebracht und mit einer Beleuchtungseinheit beleuchtet. Derartige Vorrichtungen werden beispielsweise unter der Typenbezeichnung "Optika" durch den Hersteller Silca vertrieben. In diesen erfasst eine Kamera zwei Schattenbilder des eingebrachten Schlüsselabschnittes, beziehungsweise zwei Bilder des vom diesem reflektierten Lichts in zwei verschiedenen Projektionsebenen, wobei eine Projektionsebene normal auf die Längserstreckung des Schlüsselschafts ausgerichtet ist, und in der anderen Projektionsebene eine Normalprojektion des Schlüsselschafts dargestellt ist. In der Projektionsebene normal auf die Längserstreckung des Schlüsselschafts wird das Schlüsselprofil dargestellt, und in der anderen Projektionsebene wird das Sperrprofil dargestellt. Die Kamera ist mit einer Rechnereinheit verbunden, welche das erfasste Bild verarbeitet und die konstruktiven Merkmale in den Bildern erfasst.

Vorrichtungen gemäß dem Stand der Technik weisen den Nachteil auf, dass diese nur eine Erfassung einer eingeschränkten Anzahl an konstruktiven Merkmalen des Schlüssels bereitstellen. Des Weiteren weist die im Stand der Technik angewandte Detektionsmethode den Nachteil auf, dass diese anfällig für Verschmutzungen, welche an dem Schlüssel und insbesondere in den Schlüsselprofilrillen anhaften, sowie für Beschädigungen oder Verformungen des Schlüssels ist. Diese Einflüsse bewirken eine Verfälschung der von der Kamera erfassten Bilder wodurch die Erfassung der konstruktiven Merkmale verfälscht oder verhindert wird.

Der Erfindung liegt die Aufgabe zugrunde, eine Vorrichtung zur Erfassung konstruktiver Merkmale eines Schlüssels zu bilden, welche die Nachteile der oben angeführten Konstruktionen vermeidet.

Erfindungsgemäß wird diese Aufgabenstellung dadurch gelöst, dass die Beleuchtungseinheit dazu ausgebildet ist, den Schlüssel auszuleuchten, die Kamera dazu ausgebildet ist ein Bild zumindest des Identifikationsbereichs des Schlüssels zu erfassen und an die Rechnereinheit zu übermitteln, und die Rechnereinheit dazu ausgebildet ist, eine geometrische Struktur von Fräskanten der auslaufenden Schlüsselprofilrille in dem Bild zu erfassen und eine Geometrie der Schlüsselprofilrille anhand der erfassten geometrischen Struktur der Fräskanten im Identifikationsbereich zu ermitteln.

Die erfindungsgemäße Ausführung der Vorrichtung sieht eine Beleuchtungseinheit vor, welche den Schlüssel ausleuchtet. Die Kamera der erfindungsgemäßen Vorrichtung erfasst ein Bild des ausgeleuchteten Schlüssels. Das Bild umfasst zumindest den Identifikationsbereich des Schlüssels, welcher zwischen dem Schlüsselkopf und dem Anschlag angeordnet ist, und in welchem die zumindest eine Schlüsselprofilrille des Schlüsselprofils ausläuft. Dieser Identifikationsbereich ist im Bereich jenes Endes des Schlüsselschafts angeordnet, an welchem der Schlüsselkopf anschließt, und wird bei der Benutzung des Schlüssels üblicherweise nicht in einen Schließzylinder eingeführt. Hierdurch wird der Identifikationsbereich in der Regel keinen starken mechanischen Beanspruchungen ausgesetzt und weist eine geringe Wahrscheinlichkeit auf zu verschmutzen. Wird der Schlüssel beschädigt, verbogen oder verschmutzt im Zuge der Benutzung, bleibt der Identifikationsbereich in der Regel erhalten. Hierdurch wird der Vorteil erreicht, dass die erfindungsgemäße Vorrichtung eine Identifikation von konstruktiven Merkmalen bereitstellt, welche einen Bereich des Schlüssels nutzt, welcher unempfindlich gegenüber Umwelteinflüssen ist. Besonders vorteilhaft ist, dass hierdurch selbst konstruktive Merkmale von Schlüsseln erfasst werden können, welche beschädigt, verschmutzt oder verbogen sind, und sich infolgedessen nicht für eine Erfassung durch Vorrichtungen gemäß dem Stand der Technik eignen.

Das erfasste Bild der Kamera wird an die Rechnereinheit übermittelt, welche die geometrische Struktur der Fräskanten der auslaufenden Schlüsselprofilrille im Identifikationsbereich in dem Bild erfasst. Die geometrische Struktur der Fräskanten im Identifikationsbereich ist durch den Fräsprozess für eine von verschiedenen unterschiedlichen Formen von Schlüsselprofilrillen bestimmt. Die geometrische Struktur der Fräskanten erlaubt hierdurch einen Rückschluss auf die Geometrie der Schlüsselprofilrille und somit des Schlüsselprofils. Dies ermöglicht, die Geometrie der Schlüsselprofilrille anhand der erfassten geometrischen Struktur der Fräskanten im Identifikationsbereich zu ermitteln. Besonders vorteilhaft ist hierbei, dass kein Vergleich mit einem vorbekannten Schlüsselprofil notwendig ist, und die Geometrie der Schlüsselprofilrille, beziehungsweise des gesamten Schlüsselprofils aus einem einzigen Bild bestimmt werden kann. Ein weiterer Vorteil besteht darin, dass hierdurch sogar konstruktive Merkmale von abgebrochenen Schlüsseln mit der erfindungsgemäßen Vorrichtung erfasst werden können, solange der Identifikationsbereich unbeschädigt ist. Da sich der Identifikationsbereich in einem mechanisch besonders belastbaren Bereich des Schlüssels befindet ist dies jedoch selten der Fall.

Vorteilhafte Ausgestaltungen der erfindungsgemäßen Vorrichtung sowie alternativer Ausführungsvarianten werden in weiterer Folge anhand der Figuren näher erläutert.
Figur 1 zeigt einen Schlüssel eines ersten Schlüsselsystems mit einem Schlüsselkopf, einem Schlüsselschaft und einem Anschlag in einer Seitenansicht.
Figur 2 zeigt einen Schlüssel eines zweiten Schlüsselsystems, mit einem Schlüsselkopf, einem Schlüsselschaft und einem Anschlag in einer Seitenansicht.
Figur 3 zeigt einen Schlüssel eines dritten Schlüsselsystems mit einem Schlüsselkopf, einem Schlüsselschaft und einem Anschlag in einer Seitenansicht.
Figur 4 zeigt eine erfindungsgemäße Vorrichtung mit einer Beleuchtungseinheit, einer Kamera und eine mit der Kamera verbundene Rechnereinheit in einer schematischen Ansicht.
Figur 5 zeigt die erfindungsgemäße Vorrichtung mit einer zusätzlichen Ausgabeeinheit, welche mit der Rechnereinheit verbunden ist in einer schematischen Ansicht.
Figur 6 zeigt die erfindungsgemäße Vorrichtung gemäß Figur 5 in einer weiteren Ausführungsvariante, wobei die Kamera, die Rechnereinheit und die Ausgabeeinheit mit einem Netzwerk verbunden sind.
Figur 7 zeigt ein Schlüsselkopiersystem mit einer Vorrichtung zur Erfassung konstruktiver Merkmale eines Schlüssels und einer Fabrikationseinheit in einer schematischen Ansicht.

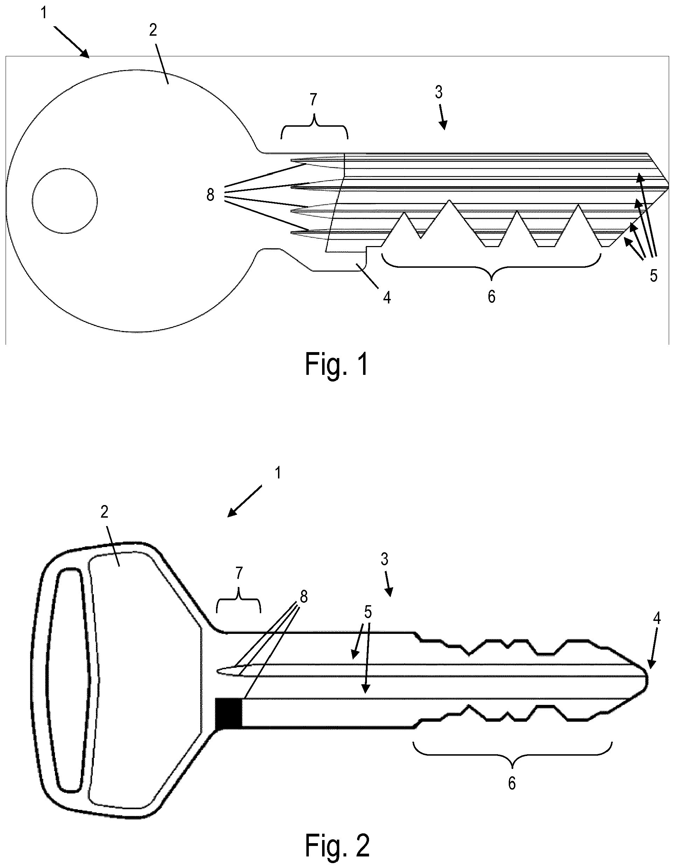

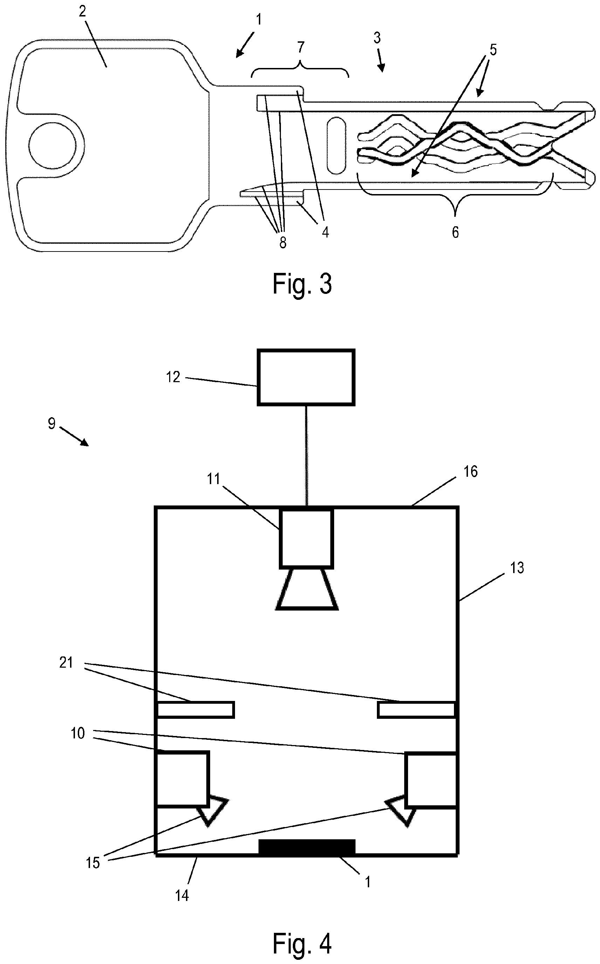

Figur 1 zeigt einen Schlüssel 1 eines ersten Schlüsselsystems mit einem Schlüsselkopf 2, einem Schlüsselschaft 3 und einem Anschlag 4. Der Schlüsselschaft 3 weist ein Schlüsselprofil auf, welches zumindest eine in den Schlüsselschaft 3 eingefräste Schlüsselprofilrille 5 umfasst. Die Schlüsselprofilrille 5 verläuft im Wesentlichen parallel zur Längserstreckung des Schlüsselschafts 3. Es sind auch Schlüsselprofile mit Schlüsselprofilrillen 5 bekannt, welche einen Verlauf aufweisen, welcher von einem parallel zum Schlüsselschaft 3 ausgerichteten, beziehungsweise parallel zueinander ausgerichteten Verlauf abweicht. Beispielsweise kann die zumindest eine Schlüsselprofilrille 5 einen geringen Winkel von bis zu 10° zum Verlauf des Schlüsselschaftes 3 aufweisen. Es sind auch größere Winkel wie beispielsweise bis zu 20°, bis zu 30° und bis zu 40° realisierbar. In Ausnahmefällen kann der Winkel auch mehr als 40° und weniger als 90°, wie beispielsweise 60° betragen. Bei einem Schlüsselprofil mit mehr als einer Schlüsselprofilrille 5 auf einer Seitenfläche des Schlüsselschaftes 3 können sich die Schlüsselprofilrillen 5 auch kreuzen. Der dargestellte Schlüssel 1 weist ein Schlüsselprofil mit vier Schlüsselprofilrillen 5 auf der dargestellten Seite des Schlüssels 1 auf, wobei auf der nicht dargestellten, der in der Seitansicht von Figur 1 gegenüberliegenden, Seite des Schlüssels 1 bei den meisten Schlüsselsystemen in der Regel weitere Schlüsselprofilrillen 5 eingefräst sind. Die Schlüsselprofilrillen 5 verlaufen im Wesentlichen parallel zueinander. Der Schlüsselschaft 3 weist zudem ein Sperrprofil 6 auf, welches je nach Schlüsselsystem unterschiedlich ausgeformt sein kann. In dem in Figur 1 dargestellten ersten Schlüsselsystem ist das Sperrprofil 6 in der Form von zackenförmigen Einfräsungen auf einer Seitenkante des Schlüsselschafts 3 ausgeführt. Andere Schlüsselsysteme verwenden beispielsweise zusätzliche Einfräsungen, welche auf der gegenüberliegenden Seitenkante des Schlüsselschafts 3 angeordnet sind. Ein Schlüssel 1 eines derartigen zweiten Schlüsselsystems ist in Figur 2 dargestellt. In Figur 3 ist ein Schlüssel 1 eines dritten Schlüsselsystems dargestellt, dessen Sperrprofil 6 durch eingefräste, gewundene Linien auf einer oder beiden Seitenflächen des Schlüsselschafts 3 gebildet ist, wobei diese Linien zwischen den Schlüsselprofilrillen 5 angeordnet sind. Verschiedene Schlüsselsysteme können sich zudem in der Anordnung und Form des Anschlags 4 unterscheiden. Die in den Figuren 1 und 3 dargestellten Schlüssel 1 weisen jeweils einen Anschlag 4 auf, welcher auf dem Schlüsselschaft 3 in der Nähe des Schlüsselkopfes 2 angeordnet ist, wobei bei der in Figur 1 dargestellte Schlüssel 1 des ersten Schlüsselsystems einen einseitigen Anschlag 4, und der in Figur 3 dargestellte Schlüssel 1 des dritten Schlüsselsystems einen beidseitigen Anschlag 4 aufweist. Der in Figur 2 dargestellte Schlüssel 1 des zweiten Schlüsselsystems weist im Gegensatz dazu einen Anschlag 4 auf, welcher an dem, dem Schlüsselkopf 2 gegenüberliegenden Ende des Schlüsselschafts 3 angeordnet ist. Der Anschlag 4 bestimmt eine Einführtiefe beim Einführen des Schlüssels 1 in einen Schliesszylinder. Der Anschlag 4 schlägt im Fall der in den Figuren 1 und 3 dargestellten Schlüssel 1 an einer Stirnseite des Schlosses an, wodurch ein weiteres Einschieben des Schlüssels 1 in das Schloss verhindert wird. Im Fall des in Figur 2 dargestellten Schlüssels 1 schlägt der Anschlag 4 an einer Begrenzung im Inneren des Schlosses an. Die in den Figuren 1 bis 3 dargestellten Schlüssel 1 weisen zudem einen Identifikationsbereich 7 auf, welcher zwischen dem Schlüsselkopf 2 und dem Anschlag 4 angeordnet ist, in welchem die Schlüsselprofilrille 5, beziehungsweise die Schlüsselprofilrillen 5 auslaufen. Die Schlüsselprofilrillen 5 werden mit unterschiedlich geformten Fräswerkzeugen in den Schlüsselschaft 3 eingefräst, wobei die Fräswerkzeuge entlang des Schlüsselschafts 3 geführt, und im Identifikationsbereich 7 abgesetzt beziehungsweise angesetzt werden. Hierdurch entstehen Fräskanten 8, welche im Identifikationsbereich 7 zusammenlaufen. Die Fräswerkzeuge können hierbei eine Vielzahl unterschiedlicher Formen aufweisen.

Im Rahmen der gegenständlichen Erfindung wurde erkannt, dass aufgrund dieses Produktionsprozesses die Fräskanten 8 im Identifikationsbereich 7 eine charakteristische geometrische Struktur aufweisen, welche zur eindeutigen Identifikation des Schlüsselprofils herangezogen werden kann. Diese geometrische Struktur der Fräskanten 8 im Identifikationsbereich 7 wird unter anderem durch das verwendete Fräswerkzeug, den Winkel des Fräswerkzeugs zu der Seitenfläche des Schlüsselschafts 3, sowie die Frästiefe beeinflusst. Die Abmessungen des verwendeten Fräswerkzeugs beeinflussen beispielsweise die Breite der Schlüsselprofilrillen 5 und somit den Abstand der Fräskanten 8 einer Schlüsselprofilrille 5 voneinander in jenem Bereich in welchem die Fräskanten 8 parallel zueinander verlaufen. Der Winkel des Fräswerkzeugs zu der Seitenfläche des Schlüsselschafts 3 beeinflusst unter anderem den Winkel in welchem die Fräskanten 8 zusammenlaufen beziehungsweise auslaufen, sowie die Symmetrie der Fräskanten 8 einer Schlüsselprofilrille 5 im Identifikationsbereich 7. Unterschiedliche Frästiefen bewirken den Effekt, dass die Fräskanten 8 der Schlüsselprofilrillen 5 nicht an derselben Position entlang der Längserstreckung des Schlüsselschafts 3 auslaufen, und somit eine unterschiedliche Länge im Identifikationsbereich 7 aufweisen. Diese Kenntnisse über den Produktionsprozess der Schlüsselprofilrillen 5 und die Auswirkungen des Produktionsprozesses auf die geometrische Struktur der Fräskanten 8 im Identifikationsbereich 7 werden im Rahmen der vorliegenden Erfindung erstmals angewendet um eine Geometrie der Schlüsselprofilrille 5, beziehungsweise der Schlüsselprofilrillen 5, des Schlüsselprofils eines Schlüssels 1 anhand der geometrischen Struktur der Fräskanten 8 im Identifikationsbereich 7 eindeutig zu rekonstruieren.

Figur 4 zeigt eine erfindungsgemäße Vorrichtung 9 zur Erfassung konstruktiver Merkmale eines Schlüssels 1 in einer ersten Ausführungsform mit einer Beleuchtungseinheit 10, einer Kamera 11 und einer mit der Kamera 11 verbundenen Rechnereinheit 12. Die Vorrichtung 9 weist zudem eine lichtundurchlässige Außenhülle 13 und eine Blende 21 auf. Der Schlüssel 1 wird zur Erfassung der konstruktiven Merkmale in die Vorrichtung 9 eingebracht und ist in Figur 4 auf einem Boden 14 der Vorrichtung 9 positioniert. Die Beleuchtungseinheit 10 leuchtet den Schlüssel 1 aus, ist in einer Ebene über dem Boden 14 der Vorrichtung 9 positioniert und weist zwei Leuchtmittel 15 auf. Die Blende 21 ist in einer Ebene oberhalb der Beleuchtungseinheit 10 positioniert. Die Kamera 11 ist an einer Decke 16 der Vorrichtung 9 positioniert und erfasst ein Bild, welches zumindest den Identifikationsbereich 7 des Schlüssels 1 abbildet. Die Kamera 11 übermittelt das erfasste Bild an die Rechnereinheit 12, welche die geometrische Struktur der Fräskanten 8 der auslaufenden Schlüsselprofilrille 5 beziehungsweise der Schlüsselprofilrillen 5 in dem Bild erfasst und die Geometrie der Schlüsselprofilrille 5 anhand der erfassten geometrischen Struktur der Fräskanten 8 im Identifikationsbereich 7 ermittelt. Zur Erfassung der Geometrie aller Schlüsselprofilrillen 5 eines Schlüssels 1, welcher auf beiden Seitenflächen des Schlüsselschafts 3 Schlüsselprofilrillen 5 aufweist, wird ein Bild von jeweils einer Seitenfläche des Schlüssels 1 erfasst und von der Rechnereinheit 12 verarbeitet. Weist der Schlüssel 1 nur auf einer Seitenfläche des Schlüsselschafts 3 Schlüsselprofilrillen 5 auf, stellt die erfindungsgemäße Vorrichtung 9 den Vorteil bereit, dass ein einzelnes Bild, welches auch nur den Identifikationsbereich 7 nur dieser einen Seitenfläche des Schlüssels 1 umfassen kann, ausreicht um das gesamte Schlüsselprofil des Schlüssels 1 zu erfassen.

Gemäß der bevorzugten Ausführungsvariante der Vorrichtung 9 ist leuchtet die Beleuchtungseinheit 10 den Schlüssel 1 in Dunkelfeldtechnik aus.Zur Ermittlung der geometrischen Struktur der Fräskanten 8 wird im Rahmen der bevorzugten Ausführungsvariante der Vorrichtung 9 erstmals die Dunkelfeldtechnik angewandt, um den Schlüssel 1 auszuleuchten und ein Bild in Dunkelfeldtechnik des Identifikationsbereichs 7 zu erfassen. Die Dunkelfeldtechnik stellt eine Beleuchtungstechnik dar in welcher der Schlüssel 1 gleichzeitig aus verschiedenen Raumrichtungen in einem flachen Einfallswinkel beleuchtet wird. Hierdurch treffen direkt auf den Schlüssel 1 gerichtete Lichtstrahlen nicht auf die Kamera 12 und nur das von den Fräskanten 8 und anderen Erhebungen von Oberflächenstrukturen des Schlüssels 1 abgelenkte oder reflektierte Licht wird im Bild erfasst. Die Beleuchtungseinheit 10 der in Figur 4 in der bevorzugten Ausführungsvariante dargestellten Vorrichtung umfasst Leuchtmittel 15, welche als die Vorrichtung umlaufender Ring aus LED Elementen ausgeführt sind. Hierdurch wird der Vorteil erreicht, dass der Schlüssel 1 besonders gleichmäßig ausgeleuchtet wird und die Beleuchtungseinheit 10 besonders kosteneffizient konstruiert werden kann. In alternativen Ausführungsvarianten kann die Beleuchtungseinheit 10 auch durch eine Lichtquelle und ein System aus Prismen und/oder Blenden gebildet werden. Durch den flachen Einfallswinkel des Lichts wird der Vorteil erreicht, dass Reflektionen an den Fräskanten 8 auftreten, welche sich im Bild kontrastreich abheben. Vertiefungen werden im Gegensatz dazu jedoch kaum oder nur sehr schwach ausgeleuchtet. Besonders vorteilhaft ist, dass der hohe Kontrast des Bildes eine besonders präzise Erfassung der konstruktiven Merkmale, wie der geometrischen Struktur der Fräskanten 8 ermöglicht. Die Rechnereinheit 12 verarbeitet das von der Kamera 11 erfasste Bild unter Anwendung von Analysemethoden auf dem Gebiet der Bildverarbeitung. Beispielsweise können die Fräskanten 8 in dem Bild erfasst werden, indem der an den Fräskanten 8 auftretende starke Helligkeitsgradient im Bild zur Erkennung der Fräskanten 8 herangezogen wird. Weitere Bildverarbeitungstechniken erschließen sich für den Fachmann aus diesem beispielhaften Verweis.

Besonders vorteilhaft ist, dass der Identifikationsbereich 7 des Schlüssels 1 unempfindlich gegenüber Beschädigungen, Verformungen oder bei der Verwendung auftretenden Verschmutzungen ist. Hierdurch wird der Vorteil erreicht, dass eine besonders robuste und sichere Erfassung von Fräskanten 8 des Schlüssels 1 bereitgestellt wird, selbst wenn der Schlüssel 1 Beschädigungen aufweist.

Gemäß der bevorzugten Ausführungsvariante der Vorrichtung 9 erfasst die Kamera 11 ein Bild, welches den Schlüsselkopf 8, das Sperrprofil 6 und den Identifikationsbereich 7 umfasst.

Hierdurch wird der Vorteil erreicht, dass in einem Bild eine Vielzahl konstruktiver Merkmale des Schlüssels 1 gleichzeitig erfasst werden können.

Gemäß der bevorzugten Ausführungsvariante der Vorrichtung 9 vergleicht die Rechnereinheit 12 die erfasste geometrische Struktur der Fräskanten 8 mit einer Liste an geometrischen Strukturen von Fräskanten 8 auslaufender Schlüsselprofilrillen 5. Die Liste umfasst die geometrischen Strukturen von Fräskanten 8 auslaufender Schlüsselprofilrillen 5 bekannter Schlüsselprofile. Die Rechnereinheit 12 ordnet dem Schlüssel 1 in weiterer Folge das bekannte Schlüsselprofil zu, dessen geometrische Struktur der Fräskanten 8 der erfassten geometrischen Struktur der Fräskanten 8 entspricht. Hierdurch wird der Vorteil erreicht, dass eine besonders rasche Zuordnung eines bekannten Schlüsselprofils zu dem von der Vorrichtung 9 erfassten Schlüssel 1 erreicht wird. Für die Erstellung einer Kopie des Schlüssels 1 kann somit ein vorgefertigter Schlüsselrohling herangezogen werden, welcher bereits das richtige Schlüsselprofil trägt. Besonders vorteilhaft ist, dass für die Erstellung einer Schlüsselkopie der Schlüsselrohling nicht mit erst einem Schlüsselprofil versehen werden muss, wodurch die Anfertigung der Schlüsselkopie rascher erfolgen kann. Alternativ kann ein Schlüsselrohling auch aus einem Basisprofil beziehungsweise Basisrohling von Grund auf hergestellt werden. Hierbei wird das Schlüsselprofil in dem Basisrohling ausgeformt. Hierdurch wird der Vorteil erreicht, dass mit einer begrenzten Menge an verschiedenen Basisrohlingen eine Vielzahl an Profilvarianten abgedeckt werden kann. Besonders vorteilhaft ist hierbei, dass begrenzte Lagerkapazitäten für Schlüsselrohlinge besser genutzt werden können.

Die Kamera 11 kann des Weiteren ein Bild des Sperrprofils 6 des Schlüssels 1 erfassen, wobei die Rechnereinheit 12 im Bild des Sperrprofils 6 eine geometrische Struktur des Sperrprofils 6 erfasst. Analog zu den Fräskanten 8 der Schlüsselprofilrillen 5 erzeugt auch die geometrische Struktur des Sperrprofils 6 Reflektionen an Kanten der geometrischen Struktur, welche im Bild erfasst werden. Die Rechnereinheit 12 kann somit die Bildverarbeitung welche auf die Fräskanten 8 der Schlüsselprofilrillen 5 angewandt wird auch auf die geometrische Struktur des Sperrprofils 6 anwenden. Hierdurch wird der Vorteil erreicht, dass mit der erfindungsgemäßen Vorrichtung 9, gleichzeitig mit der Erfassung des Schlüsselprofils, auch das Sperrprofil 6 des Schlüssels 1 erfasst werden kann.

In einer alternativen Ausführungsvariante kann die Kamera 11 ein Bild erfassen, welches den Identifikationsbereich 7 und das Sperrprofil 6 umfasst. Hierdurch sind der Identifikationsbereich 7 und das Sperrprofil 6 in einem gemeinsamen Bild abgebildet. Die Rechnereinheit 12 erfasst hierbei in dem einen Bild die geometrische Struktur des Sperrprofils 6 und der Fräskanten 8 der auslaufenden Schlüsselprofilrille 5 gemeinsam. Hierdurch wird der Vorteil erreicht, dass zur Erfassung der Geometrie einer oder mehrerer Schlüsselprofilrillen 5 und des Sperrprofils 6 nur ein einzelnes Bild notwendig ist. Dies führt zu einer schnelleren und effizienteren Erfassung dieser konstruktiven Merkmale des Schlüssels 1.

Gemäß der bevorzugten Ausführungsvariante der Vorrichtung 9 erfasst die Kamera 11 des Weiteren ein Bild des Schlüsselkopfes 2 des Schlüssels 1, und die Rechnereinheit 12 erfasst in dem Bild des Schlüsselkopfes 2 eine geometrische Struktur des Schlüsselkopfes 2. Die Erfassung der geometrischen Struktur des Schlüsselkopfes 2 erfolgt wiederum analog zu der Erfassung der geometrischen Strukturen der Fräskanten 8 und des Sperrprofils 6. Hierdurch wird der Vorteil erreicht, dass mit der erfindungsgemäßen Vorrichtung 9 der Schlüsselkopf 2 erfasst werden kann. Wie eingangs erwähnt ermöglicht dies auf den Hersteller des Schlüssels 1 rückzuschließen, oder zur Anfertigung einer Kopie einen Schlüsselkopf 2 auszuwählen, welcher eine geometrische Struktur aufweist, welche im Wesentlichen der erfassten geometrischen Struktur des Schlüsselkopfes 2 entspricht.

Gemäß der bevorzugten Ausführungsvariante der erfindungsgemäßen Vorrichtung 9 vergleicht die Rechnereinheit 12 die erfasste geometrische Struktur des Schlüsselkopfes 2 mit einer Liste an geometrischen Strukturen bekannter Schlüsselköpfe 2. Die Rechnereinheit 12 ordnet dem Schlüssel 1 in weiterer Folge den bekannten Schlüsselkopf 2 zu, dessen geometrische Struktur der erfassten geometrischen Struktur des Schlüsselkopfes 2 entspricht. Hierdurch wird der Vorteil erreicht, dass für die Anfertigung einer Kopie ein Schlüsselrohling des Herstellerunternehmens des originalen Schlüssels 1 ausgewählt und herangezogen werden kann.

Gemäß der bevorzugten Ausführungsvariante der erfindungsgemäßen Vorrichtung 9 erfasst die Rechnereinheit 12 in dem Bild des Schlüsselkopfes 2 des Weiteren zumindest eine geometrische Struktur einer Identifikationsmarkierung, welche auf dem Schlüsselkopf 2 angeordnet, und in den Figuren nicht dargestellt ist. Die Erfassung von Identifikationsmarkierungen bietet den Vorteil, dass auf dem Schlüsselkopf 2 vorhandene Identifikationsmarkierungen verwendet werden können, um Rückschlüsse auf das Schlüsselprofil oder den Schlüsselhersteller zu ziehen. Die Identifikationsmarkierungen können unter anderem ein Logo des Schlüsselherstelles, einen Namen des Schlüsselherstellers, ein Logo oder einen Name eines Besitzers eines Eigenprofils, welches nur diesem einen Besitzer zugeordnet ist, eine Schlüsselnummer und eine Serienummer umfassen. Die Rechnereinheit kann des Weiteren Schrifterkennungsmethoden auf die Identifikationsmarkierungen zu Auswertung anwenden. Des Weiteren kann die Rechnereinheit 12 gemäß dieser Ausführungsvariante die erfasste geometrische Struktur der Identifikationsmarkierung mit einer Liste an geometrischen Strukturen bekannter Identifikationsmarkierungen vergleichen. Die Rechnereinheit 12 ordnet in weiterer Folge dem Schlüssel 1 die zumindest eine bekannte Identifikationsmarkierung zu, deren geometrische Struktur der erfassten geometrischen Struktur der Identifikationsmarkierung entspricht. Besonders vorteilhaft ist, dass hierdurch eine automatisierte Erkennung von Identifikationsmerkmalen und eine automatisierte Zuordnung des richtigen Schlüsselprofils, Schlüsselkopfes 2, Schlüsselherstellers oder Schlüsselsystems zu dem Schlüssel 1 erfolgen kann.

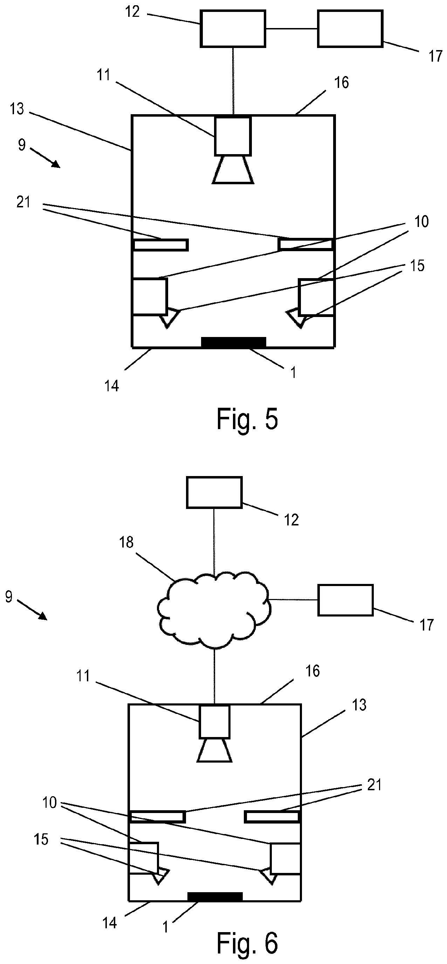

Figur 5 zeigt eine weitere Ausführungsvariante der Vorrichtung 9, in welcher die Vorrichtung 9 des Weiteren eine mit der Rechnereinheit 12 verbundene Ausgabeeinheit 17 aufweist. Die Rechnereinheit 12 übermittelt Ausgabeinformation an die Ausgabeeinheit 17, welche die Ausgabeinformation ausgibt. Die Ausgabeeinheit 17 kann beispielsweise ein Bildschirm eines Computers eines Tabletrechners, Smartphones oder Ähnliches sein. Die Ausgabeinformation kann unter anderem das Bild des Identifikationsbereichs 7, das Bild des Sperrprofils 6, das Bild des Schlüsselkopfs 2, die erfassten geometrischen Struktur der Fräskanten 8, die Geometrie der Schlüsselprofilrille 5, das zugeordneten Schlüsselprofil, die erfasste geometrische Struktur des Sperrprofils 6, die erfasste geometrische Struktur des Schlüsselkopfes 2, den dem Schlüssel zugeordneten Schlüsselkopf 2, die erfasste geometrische Struktur der Identifikationsmarkierung und die dem Schlüssel 1 zugeordnete Identifikationsmarkierung beinhalten. Hierdurch wird der Vorteil erreicht, dass eine Benutzerschnittstelle bereitgestellt wird, welche es einem Benutzer der Vorrichtung 9 ermöglicht die von der Vorrichtung 9 erfassten konstruktiven Merkmale des Schlüssels 1 abzurufen.

Figur 6 zeigt eine alternative Ausführungsvariante der in Figur 5 dargestellten erfindungsgemäßen Vorrichtung 9, in welcher die Kamera 11 und die Rechnereinheit 12 mit einem Netzwerk 18 verbunden sind, wobei die Kamera 11 das Bild über das Netzwerk 18 an die Rechnereinheit 12 übermittelt. Hierdurch wird der Vorteil erreicht, dass die Rechnereinheit 12 eine umfangreiche Datenbank enthalten kann, welche die für den Vergleich der verschiedenen geometrischen Strukturen notwenigen Listen umfasst. Die netzwerkgebundene Rechnereinheit 12 ermöglicht diese Datenbank aufzubauen, indem Bilder verschiedener Kameras 11 zu einer zentralen Rechnereinheit 12 übermittelt werden. Aufgrund der in den Bildern erfassten geometrischen Strukturen können die zuvor genannten Listen erstellt, und in weiterer Folge ständigen Verbesserungen und Erweiterungen unterzogen werden. In der bevorzugten Ausführungsvariante der Vorrichtung 9 erfolgen die Erweiterungen und Verbesserungen automatisiert mittels einer selbstlernenden Bilderkennungssoftware, welche die Algorithmen der Bilderkennung selbstständig erweitert bzw. aktualisiert, die gewonnen Daten in der Datenbank speichert und diese so aktualisiert und leistungsfähiger für die Erkennung der Schlüssel macht., Diese Bilderkennungssoftware läuft auf der Rechnereinheit 12 welche die geometrischen Strukturen der Bilder verarbeitet und gegebenenfalls manuell ausgewählte Schlüsselrohlinge zugeordnet speichert. In der dargestellten Ausführungsvariante ist zudem die Ausgabeeinheit 17 mit dem Netzwerk 18 verbunden, wobei die Rechnereinheit 12 die Ausgabeinformationen über das Netzwerk 18 an die Ausgabeeinheit 17 übermittelt. Hierdurch ergibt sich der Vorteil, dass die Kamera 11, die Rechnereinheit 12 und die Ausgabeeinheit 17 an unterschiedlichen Orten positioniert sein können. Beispielsweise können die Kamera 11 und die Ausgabeeinheit 17 an einem gemeinsamen Ort vorhanden sein, wodurch ein Benutzer der Vorrichtung 9 auf die auf der dezentralen Rechnereinheit 12 vorhandenen Datenbank zugreifen kann. Des Weiteren wird hierdurch ermöglicht die Ausgabeinformation an einen Schlüsselhersteller zu übermitteln, welcher über die Ausgabeeinheit 17 verfügt und mittels der Ausgabeinformation eine Schlüsselkopie erstellen kann.

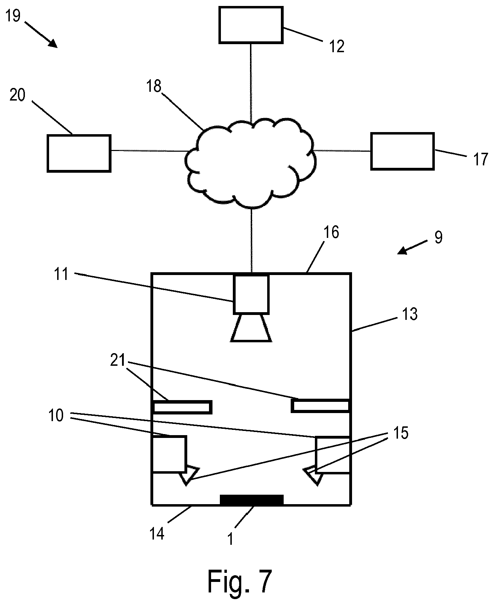

Figur 7 zeigt ein Schlüsselkopiersystem 19 zur Erstellung einer Schlüsselkopie, wobei das Schlüsselkopiersystem 19 eine wie in Bezug auf die Figuren 5 oder 6 beschriebene Vorrichtung 9 und eine zusätzliche Fabrikationseinheit 20 umfasst. Die Fabrikationseinheit 20 ist mit der Rechnereinheit 12 der Vorrichtung 9 verbunden. Die Rechnereinheit 12 erstellt aus der Ausgabeinformation einen Datensatz und übermittelt diesen an die Fabrikationseinheit 20. Die Fabrikationseinheit 20 erstellt anhand des Datensatzes eine Schlüsselkopie indem zumindest eines aus der Geometrie der Schlüsselprofilrille 5, dem zugeordneten Schlüsselprofil, der erfassten geometrischen Struktur des Sperrprofils 6 und der dem Schlüssel 1 zugeordneten Identifikationsmarkierung in einem Schlüsselrohling ausgeformt wird, oder die Schlüsselkopie in einem Stück aus einem Grundmaterial ausgeformt wird. Die Fabrikationseinheit 20 kann beispielsweise als mechanische oder elektronische CNC Schlüsselfräsvorrichtung ausgeführt sein. Hierdurch wird der Vorteil erreicht, dass die Ausgabeinformation genutzt werden kann um eine Schlüsselkopie zu erstellen.

In der bevorzugten Ausführungsvariante des Schlüsselkopiersystems 19 umfasst das Schlüsselkopiersystem 19 eine Vorrichtung 9, deren Rechnereinheit 12 mit dem Netzwerk 18 verbunden ist. In dieser in Figur 7 dargestellten Ausführungsvariante ist des Weiteren die Fabrikationseinheit 20 mit dem Netzwerk 18 verbunden, wobei die Rechnereinheit 12 die Ausgabeinformationen über das Netzwerk 18 an die Fabrikationseinheit 20 übermittelt. Hierdurch wir der Vorteil erreicht, dass sich die Fabrikationseinheit 20 nicht am selben Ort wie die Rechnereinheit 12 befinden muss und beispielsweise direkt durch ein schlüsselproduzierendes Unternehmen betrieben werden kann.

In einer alternativen Ausführungsvariante ist die Fabrikationseinheit 20 eine Fabrikationseinheit 20 aus dem Gebiet der additiven Fertigung. Hierdurch wird der Vorteil erreicht, dass die Ausgabeinformation direkt von der Fabrikationseinheit 20 zur Herstellung einer Schlüsselkopie genutzt werden kann, ohne dass ein Schlüsselrohling notwendig ist. Insbesondere sind metallische Grundmaterialien bevorzugt. Die Fabrikationseinheit 20 kann dreidimensionale Druckverfahren mit metallischen Grundmaterialien, wie beispielsweise selektives Laserschmelzen durchführen.

## Patentansprüche

1. Vorrichtung (9) zur Erfassung konstruktiver Merkmale eines Schlüssels (1), wobei der Schlüssel (1) einen Schlüsselkopf (2) und einen Schlüsselschaft (3) sowie einen Anschlag (4) aufweist, und der Schlüsselschaft (3) ein Schlüsselprofil, welches zumindest eine in den Schlüsselschaft (3) eingefräste Schlüsselprofilrille (5) umfasst, sowie ein Sperrprofil (6) aufweist, und der Schlüssel (1) einen zwischen dem Schlüsselkopf (2) und dem Anschlag (4) angeordneten Identifikationsbereich (7) aufweist, in welchem die Schlüsselprofilrille (5) ausläuft, und wobei die Vorrichtung (9) eine Beleuchtungseinheit (10), eine Kamera (11) und eine mit der Kamera (11) verbundene Rechnereinheit (12) aufweist,
**dadurch gekennzeichnet, dass**
die Beleuchtungseinheit (10) dazu ausgebildet ist, den Schlüssel (1) auszuleuchten, die Kamera (11) dazu ausgebildet ist ein Bild zumindest des Identifikationsbereichs (7) des Schlüssels (1) zu erfassen und an die Rechnereinheit (12) zu übermitteln, und die Rechnereinheit (12) dazu ausgebildet ist, eine geometrische Struktur von Fräskanten (8) der auslaufenden Schlüsselprofilrille (5) in dem Bild zu erfassen und eine Geometrie der Schlüsselprofilrille (5) anhand der erfassten geometrischen Struktur der Fräskanten (8) im Identifikationsbereich (7) zu ermitteln.

2. Vorrichtung (9) gemäß Anspruch 1, **dadurch gekennzeichnet, dass** die Beleuchtungseinheit (10) dazu ausgebildet ist, den Schlüssel (1) in Dunkelfeldtechnik auszuleuchten.

3. Vorrichtung (9) gemäß einem der Ansprüche 1 oder 2, **dadurch gekennzeichnet, dass** die Kamera (11) dazu ausgebildet ist ein Bild zu erfassen, welches den Schlüsselkopf (2), das Sperrprofil (6), und den Identifikationsbereich (7) umfasst.

4. Vorrichtung (9) gemäß einem der Ansprüche 1 bis 3, **dadurch gekennzeichnet, dass** die Beleuchtungseinheit (10) als Ring aus LED Elementen ausgebildet ist.

5. Vorrichtung (9) gemäß einem der Ansprüche 1 bis 4, **dadurch gekennzeichnet, dass** die Rechnereinheit (12) dazu ausgebildet ist die erfasste geometrischen Struktur der Fräskanten (8) mit einer Liste an geometrischen Strukturen von Fräskanten (8) auslaufender Schlüsselprofilrillen (5) zu vergleichen, welche bekannten Schlüsselprofilen zugeordnet sind, und dem Schlüssel (1) das bekannte Schlüsselprofil zuzuordnen, dessen geometrische Struktur der Fräskanten (8) der erfassten geometrischen Struktur der Fräskanten (8) entspricht.

6. Vorrichtung (9) gemäß einem der Ansprüche 1 bis 5, **dadurch gekennzeichnet, dass** die Kamera (11) dazu ausgebildet ist ein Bild des Sperrprofils (6) zu erfassen, und die Rechnereinheit (12) dazu ausgebildet ist, in dem Bild des Sperrprofils (6) eine geometrische Struktur des Sperrprofils (6) zu erfassen.

7. Vorrichtung (9) gemäß Anspruch 6, **dadurch gekennzeichnet, dass** die Kamera dazu ausgebildet ist ein Bild zu erfassen, welches den Identifikationsbereich (7) und das Sperrprofil (6) umfasst, wobei die Rechnereinheit (12) dazu ausgebildet ist, in dem einen Bild die geometrische Struktur des Sperrprofils (6) und der Fräskanten (8) der auslaufenden Schlüsselprofilrille (5) zu erfassen.

8. Vorrichtung (9) gemäß einem der Ansprüche 1 bis 7, **dadurch gekennzeichnet, dass** die Kamera (11) dazu ausgebildet ist ein Bild des Schlüsselkopfs (2) zu erfassen, und die Rechnereinheit (12) dazu ausgebildet ist in dem Bild des Schlüsselkopfs (2) eine geometrische Struktur des Schlüsselkopfs (2) zu erfassen.

9. Vorrichtung (9) gemäß Anspruch 8, **dadurch gekennzeichnet, dass** die Rechnereinheit (12) dazu ausgebildet ist die erfasste geometrische Struktur des Schlüsselkopfs (2) mit einer Liste an geometrischen Strukturen bekannter Schlüsselköpfe (2) zu vergleichen, und dem Schlüssel (1) den bekannten Schlüsselkopf (2) zuzuordnen, dessen geometrische Struktur der erfassten geometrischen Struktur des Schlüsselkopfs (2) entspricht.

10. Vorrichtung (9) gemäß einem der Ansprüche 8 oder 9, **dadurch gekennzeichnet, dass** die Rechnereinheit (12) dazu ausgebildet ist, in dem Bild des Schlüsselkopfs (2) zumindest eine auf dem Schlüsselkopf (2) angeordnete geometrische Struktur zumindest einer Identifikationsmarkierung zu erfassen.

11. Vorrichtung (9) gemäß Anspruch 10, **dadurch gekennzeichnet, dass** die Rechnereinheit (12) dazu ausgebildet ist die erfasste geometrische Struktur der Identifikationsmarkierung mit einer Liste an geometrischen Strukturen bekannter Identifikationsmarkierungen zu vergleichen, und dem Schlüssel (1) die zumindest eine bekannte Identifikationsmarkierung zuzuordnen, deren geometrische Struktur der erfassten geometrischen Struktur der Identifikationsmarkierung entspricht.

12. Vorrichtung (9) gemäß den Ansprüchen 5, 6, 9 und 11, **dadurch gekennzeichnet, dass** die Vorrichtung (9) eine mit der Rechnereinheit (12) verbundene Ausgabeeinheit (17) aufweist, wobei die Rechnereinheit (12) dazu ausgebildet ist Ausgabeinformation an die Ausgabeeinheit (17) zu übermitteln und die Ausgabeeinheit (17) dazu ausgebildet ist die Ausgabeinformation auszugeben, wobei die Ausgabeinformation zumindest eines aus der Gruppe bestehend aus dem Bild des Identifikationsbereichs (7), dem Bild des Sperrprofils (6), dem Bild des Schlüsselkopfs (2), der erfassten geometrischen Struktur der Fräskanten (8), der Geometrie der Schlüsselprofilrille (5), dem zugeordneten Schlüsselprofil, der erfassten geometrischen Struktur des Sperrprofils (6), der erfassten geometrischen Struktur des Schlüsselkopfes (2), dem Schlüssel (1) zugeordneten Schlüsselkopf (2), der erfassten geometrischen Struktur der Identifikationsmarkierung und der dem Schlüssel (1) zugeordneten Identifikationsmarkierung umfasst.

13. Vorrichtung (9) gemäß einem der Ansprüche 1 bis 12, **dadurch gekennzeichnet, dass** die Kamera (11) und die Rechnereinheit (12) mit einem Netzwerk (18) verbunden sind, und die Kamera (11) das Bild über das Netzwerk (18) an die Rechnereinheit (12) übermittelt.

14. Vorrichtung (9) gemäß Anspruch 13, **dadurch gekennzeichnet, dass** die Ausgabeeinheit (17) mit dem Netzwerk (18) verbunden ist, und die Rechnereinheit (12) die Ausgabeinformation über das Netzwerk (18) an die Ausgabeeinheit (17) übermittelt.

15. Schlüsselkopiersystem (19) zur Erstellung einer Schlüsselkopie mit einer Vorrichtung (9) gemäß einem der Ansprüche 12 bis 14 und einer Fabrikationseinheit (20), **dadurch gekennzeichnet, dass** die Fabrikationseinheit (20) mit der Rechnereinheit (12) verbunden ist, und die Rechnereinheit (12) dazu ausgebildet ist aus der Ausgabeinformation einen Datensatz zu erstellen und an die Fabrikationseinheit (20) zu übermitteln, wobei die Fabrikationseinheit (20) dazu ausgebildet ist anhand des Datensatzes in einem Schlüsselrohling zumindest eines aus der Gruppe bestehend aus der Geometrie der Schlüsselprofilrille (5), dem zugeordneten Schlüsselprofil, der erfassten geometrischen Struktur des Sperrprofils (6) und der dem Schlüssel (1) zugeordneten Identifikationsmarkierung auszuformen oder die Schlüsselkopie aus einem Grundmaterial auszuformen.

16. Schlüsselkopiersystem (19) gemäß Anspruch 15, **dadurch gekennzeichnet, dass** bei Verbindung der Rechnereinheit (12) mit dem Netzwerk (18), die Fabrikationseinheit (20) mit dem Netzwerk (18) verbunden ist, und die Rechnereinheit (12) die Ausgabeinformation über das Netzwerk (18) an die Fabrikationseinheit (20) übermittelt.

17. Schlüsselkopiersystem (19) gemäß einem der Ansprüche 15 und 16, **dadurch gekennzeichnet, dass** die Fabrikationseinheit (20) eine Fabrikationseinheit (20) aus dem Gebiet der additiven Fertigung ist.

18. Schlüsselkopiersystem (19) gemäß Anspruch 17, **dadurch gekennzeichnet, dass** das Grundmaterial ein Metall ist.
